(19) Europäisches Patentamt
European Patent Office
Office européen des brevets

(11) **EP 3 874 807 B1**

(12) **EUROPEAN PATENT SPECIFICATION**

(45) Date of publication and mention
of the grant of the patent:
**30.10.2024 Bulletin 2024/44**

(21) Application number: **19797321.7**

(22) Date of filing: **23.10.2019**

(51) International Patent Classification (IPC):
*H04W 52/02* $^{(2009.01)}$      *H04W 28/18* $^{(2009.01)}$
*H04W 4/06* $^{(2009.01)}$

(52) Cooperative Patent Classification (CPC):
**H04W 4/06; H04W 4/08; H04W 52/0216;
H04W 52/0219;** H04W 8/186; H04W 48/12;
Y02D 30/70

(86) International application number:
**PCT/FI2019/050751**

(87) International publication number:
**WO 2020/089515 (07.05.2020 Gazette 2020/19)**

(54) **METHOD FOR GROUPING UES FOR WAKE-UP SIGNAL ASSIGNMENT BASED ON BROADCAST PARAMETERS**

VERFAHREN ZUM GRUPPIEREN VON BENUTZERGERÄTEN ZUR AUFWECKSIGNALZUORDNUNG BASIEREND AUF RUNDFUNKPARAMETERN

PROCÉDÉ POUR REGROUPER DES UE POUR ATTRIBUTION DE SIGNAL D'ACTIVATION SUR LA BASE DE PARAMÈTRES DE DIFFUSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.11.2018 US 201862754246 P**

(43) Date of publication of application:
**08.09.2021 Bulletin 2021/36**

(73) Proprietor: **Nokia Technologies Oy
02610 Espoo (FI)**

(72) Inventors:
• **MANGALVEDHE, Nitin
Hoffman Estates, Illinois 60010 (US)**
• **RATASUK, Rapeepat
Inverness, Illinois 60010 (US)**
• **BHATOOLAUL, David
Swindon Wiltshire SN25 2HD (GB)**

(74) Representative: **Script Intellectual Property LLP
Suite J, Anchor House
School Close
Chandlers Ford
Eastleigh, Hampshire SO53 4DY (GB)**

(56) References cited:
**EP-A1- 2 811 806       EP-A2- 2 866 513
WO-A1-2018/175760**

**Description**

FIELD:

The field of the invention relates to wireless communication and more particularly relates to an access node, e.g. a wireless base station (eNB), broadcasting a set of user equipment grouping parameters to a plurality of wireless terminals, e.g. user equipment (UEs), which determines how the plurality of UEs are to be organized into groups associated with different wake-up signals (WUS) to be transmitted at predetermined intervals before different transmissions, e.g. paging occasions (PO), for the UEs in each group, to indicate to the UEs when to wake-up prior to monitoring signals transmitted from the access node.

BACKGROUND:

The wake-up signal (WUS) is transmitted at a predetermined time before the different transmissions, e.g. paging occasions (PO) to the UE to indicate to the UE that it should monitor the different transmissions for the control channel. The UE wakes up from sleep before the WUS transmission time and if it detects the WUS, it monitors the control channel transmission at the PO. If it does not detect the WUS, it goes back to sleep. Since the UE consumes less power in monitoring the WUS than in decoding the control channel, power savings are realized.
WO2018/175760A1 discloses systems and methods of reducing power consumption associated with paging or cDRX. A wake-up receiver wakes up from an idle mode or cDRX state. Whether a wake-up signal has been received is determined. The wake-up signal is a low complexity signal that is less complicated and is repeated multiple times at resource elements indicated in a configuration from an eNB. If received, a baseband transceiver wakes up for reception. Many embodiments are disclosed which describe the configuration and content of the wake-up signals. For a UE group, predefined mapping can be used to associate the UE group to a sequence used within the wake-up signal and UEs can be assigned to a particular group based on their individual identifier. EP2866513A2 discloses a method for gaining access in which a station gains access to a medium in a wireless communication system, comprising the steps of sensing a carrier wave for a medium so as to transmit a set frame and, if the medium is busy, executing a random back-off procedure, wherein the start point of the random back-off procedure is indicated by a second parameter randomly selected from within a range in accordance with a first parameter. EP2811806A1 discloses a method and apparatus for accessing channels in a wireless LAN system. The method of accessing channels in a station of the wireless communication system comprises the steps of transmitting a first frame of a channel access request to an access point and receiving from the access point a second frame related to whether access to the channel is allowed in response to the first frame, wherein the second frame can include a value for a channel access start offset with respect to the station. In order to simplify message structure with large number of stations, the station identifiers may be related to an association identifier which may be divided into several groups to efficiently perform data transmission with a specific group identifier being assigned to each group.

SUMMARY:

Method, apparatus, and computer program product example embodiments provide a wake-up radio design for an access node, e.g. a wireless base station (eNB), broadcasting a set of user equipment grouping parameters to a plurality of wireless user equipment (UEs), which determines how the plurality of UEs are to be organized into groups associated with different wake-up signals (WUS) to be transmitted at predetermined intervals before different transmissions, e.g. paging occasions (PO), to the UEs in each group, to indicate to the UEs when to wake-up prior to monitoring different transmissions from the access node.
According to aspects there are provided methods, user equipment and an access node as set out in claims 1, 2, 7 and 8.
The resulting invention enables the distribution of UEs to be altered among different groups based on certain network-configured criteria.

DESCRIPTION OF THE FIGURES:

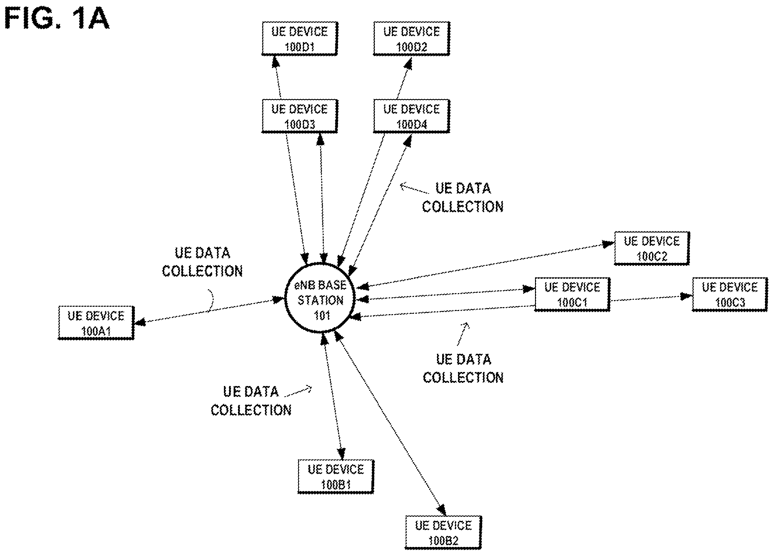

Figure 1A illustrates an example conceptual drawing depicting a wake-up radio design for an access node, for example wireless base station (eNB), accessing identification information (ID) from an example plurality of wireless user equipment devices (UEs).

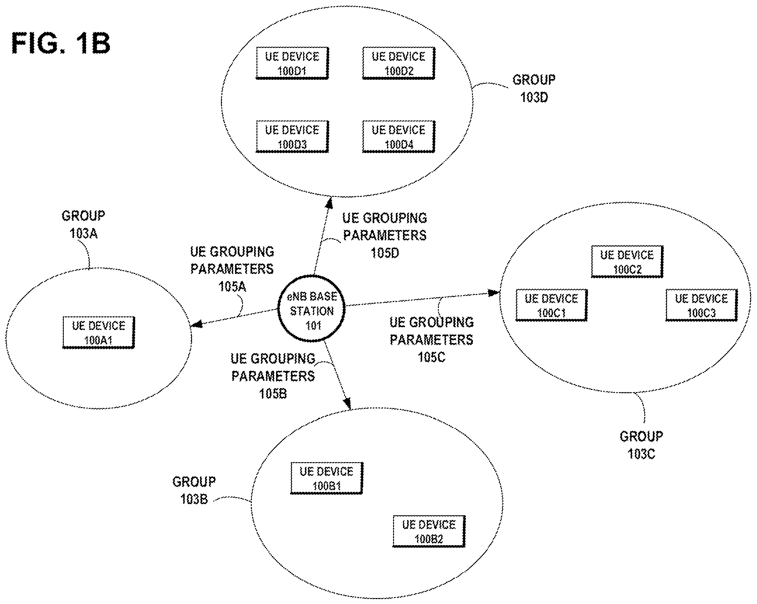

Figure 1B illustrates an example conceptual drawing of the wake-up radio design of Figure 1A, wherein the access node broadcasts a set of user equipment grouping parameters to the plurality of UEs, assigning how the plurality of UEs are to be organized into groups associated with different assigned wake-up signals to be transmitted by the access node. A separate wake-up signal is assigned to each group. User equipment grouping parameters may comprise a respective/relative number of UEs per group, and based on that, the UEs may determine to which group they belong, based on a formula, for example a function specifying distribution among the different groups. User equipment grouping parameters may also be based on the UE ID, in addition to or instead of the number of UEs. The user equipment grouping parameters may comprise a relative number of wireless devices separately for each group. The user equipment grouping parameters may comprise a distribution of wireless user equipment devices among the groups. The user equipment grouping parameters determine how the plurality of UEs are to be organized into groups associated with different wake-up signals (WUS). The wake-up signals (WUS) are to be transmitted at predetermined intervals before different transmissions e.g. paging occasions (PO), for the UEs in each group. Receipt of the wake-up signal (WUS) triggers the UEs in the group to wake up prior to monitoring for the different transmissions from the access node.

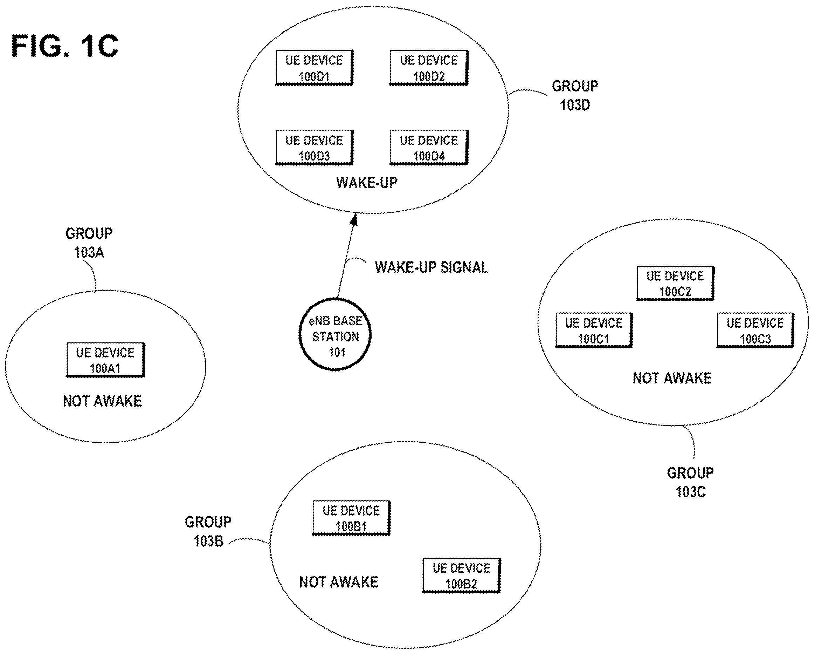

Figure 1C illustrates an example conceptual drawing of the wake-up radio design of Figure 1B, wherein the access node transmits wake-up signals to cause wireless user equipment devices in an assigned group to monitor a control channel in response to receiving the wake-up signal, based on the grouping of the wireless user equipment devices to one of the groups associated with the wake-up signal. Receipt of the wake-up signal (WUS) triggers the UEs in the group to monitor for the different transmissions from the access node.

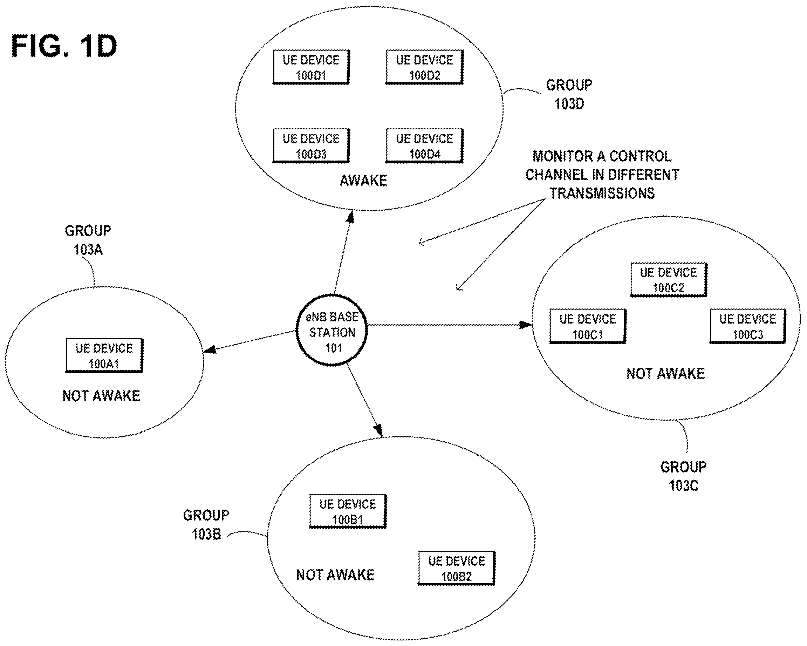

Figure 1D illustrates an example conceptual drawing of the wake-up radio design of Figure 1C, wherein the access node broadcasts the different transmissions a group that has been awaked by previously received wake-up signal (WUS) that has triggered the UEs in the group to monitor for the different transmissions from the access node.

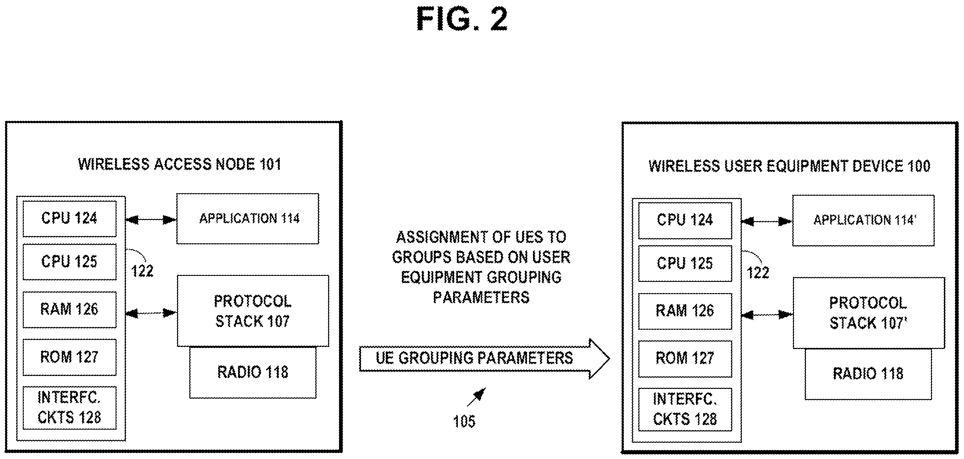

Figure 2 illustrates an example wireless network showing a functional block diagram of a wake-up radio design for an access node broadcasting a set of user equipment grouping parameters to a plurality of wireless user equipment (UEs).

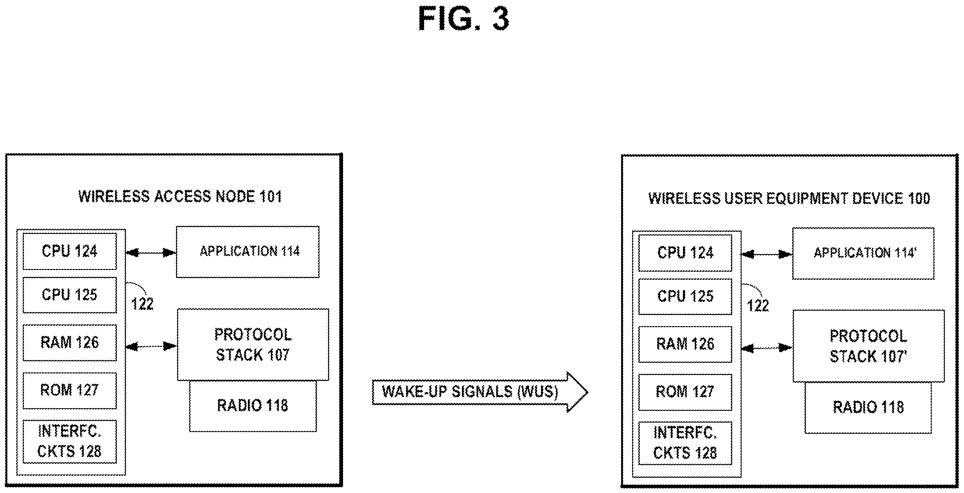

Figure 3 illustrates the example wireless network of Figure 2, showing transmission by the access node of different wake-up signals (WUS) to be transmitted at predetermined intervals before different transmissions for the UEs in each group.

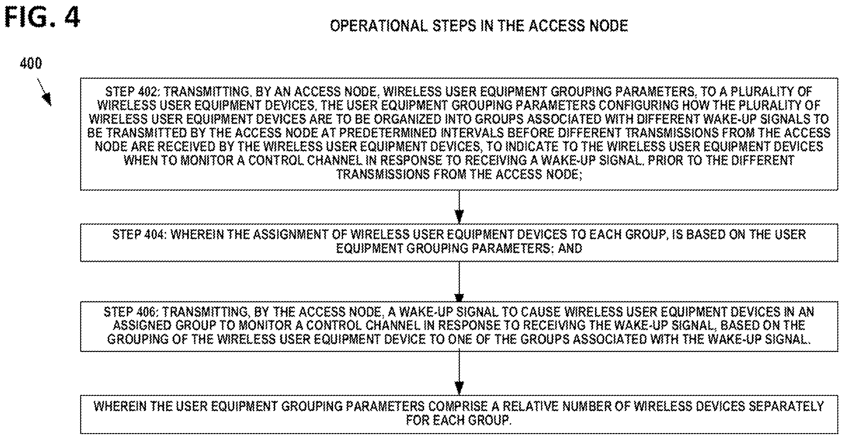

Figure 4 illustrates an example flow diagram of operational steps in the access node broadcasting a set of user equipment grouping parameters to a plurality of wireless user equipment (UEs), for determining to which group each UE belongs, in accordance with at least one embodiment of the present invention.

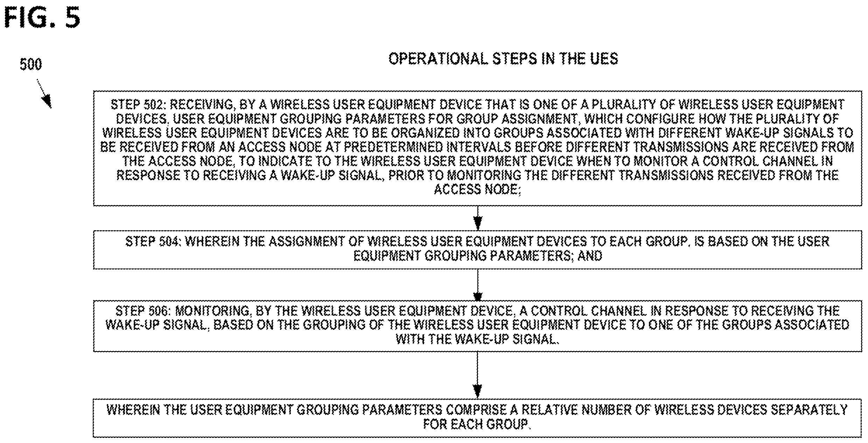

Figure 5 illustrates an example flow diagram of operational steps in the receiving by the UEs of different wake-up signals (WUS) at predetermined intervals before different transmissions for the UEs in each group, in accordance with at least one embodiment of the present invention.

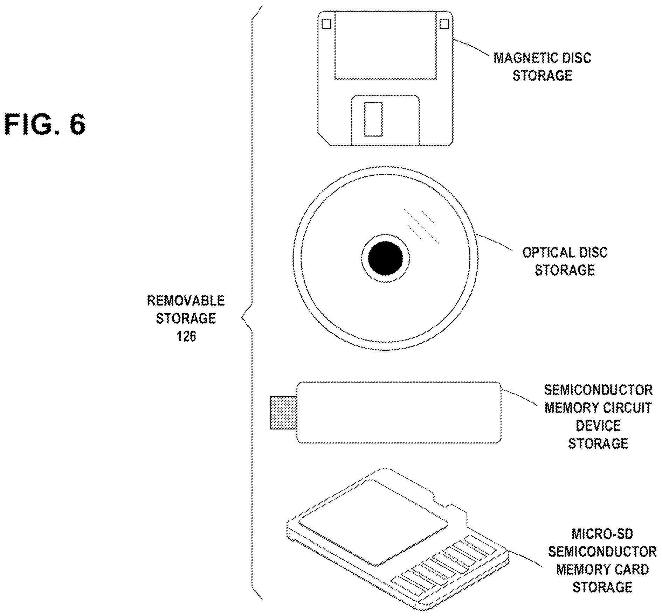

Figure 6 illustrates an example embodiment of the invention, wherein examples of removable storage media are shown, based on magnetic, electronic and/or optical technologies, such as magnetic disks, optical disks, semiconductor memory circuit devices and micro-SD memory cards (SD refers to the Secure Digital standard) for storing data and/or computer program code as an example computer program product, in accordance with an example embodiment of the invention.

## DISCUSSION OF EXAMPLE EMBODIMENTS OF THE INVENTION:

The assignment of wireless user equipment devices (UEs) to different groups is determined by the access node, for example wireless base station (eNB), based on agreed criteria. Both the eNB and the UE must have a common understanding of how each UE is assigned a group index.

In accordance with an example embodiment of the invention, the eNB can influence how UEs are associated with different groups through additional parameters. The invention enables the UEs to use these parameters. If the configured method and the parameters are known to the UEs, each UE can uniquely determine its group index.

Figure 1A illustrates an example conceptual drawing depicting a wake-up radio design for an access node, for example wireless base station (eNB), accessing identification information (ID) from an example plurality of wireless user equipment devices (UEs) to use in constructing a set of user equipment grouping parameters.

Figure 1B illustrates an example conceptual drawing of the wake-up radio design of Figure 1A, wherein the access node broadcasts a set of user equipment grouping parameters to the plurality of UEs, assigning how the plurality of UEs are to be organized into groups associated with different assigned wake-up signals to be transmitted by the access node. A separate wake-up signal is assigned to each group. User equipment grouping parameters may comprise a respective/relative number of UEs per group, and based on that, the UEs may determine to which group they belong, based on a formula, for example a function specifying distribution among the different groups. User equipment grouping parameters may also be based on the UE ID, in addition to or instead of the number of UEs. The user equipment grouping parameters may comprise a relative number of wireless devices separately for each group. The user equipment grouping parameters may comprise a distribution of wireless user equipment devices among the groups. The user equipment grouping parameters determine how the plurality of UEs are to be organized into groups associated with different wake-up signals (WUS). The wake-up signals (WUS) are to be transmitted at predetermined intervals before different transmissions, e.g. paging occasions (PO), for the UEs in each group. Receipt of the wake-up signal (WUS) triggers the UEs in the group to wake up prior to monitoring for the different transmissions from the access node.

In one example embodiment of the invention, the access node or eNB broadcasts a set of parameters in system information that determine how UEs are assigned to each group, where each group is associated with a different WUS.

One or more parameters may be broadcast for each group, where the number of groups is also configured in system information.

The broadcast parameters are used by the UE based on the method for grouping:

The grouping method may either be fixed or it may also be indicated by the eNB, e.g., in system information.

In one embodiment, a single UE ID is signaled per group, where the UE ID indicates the beginning of the range of UE IDs assigned to the group:

Alternatively, the single UE ID for each group may indicate the end of the range of UE IDs assigned to the group.

Alternately, a range of UE ID is signaled per group.

This allows the eNB to flexibly determine which UEs are assigned to each group through defining the range of UE IDs associated with each group.

The eNB may obtain information on which UEs are within the tracking area through messaging from the MME and can thereby determine the range of UE IDs for each group.

The UE ID indicated may be the IMSI or S-TMSI or another similar ID.

In another embodiment of the invention, the index of the group to which each UE is assigned may be determined as a function of the UE ID and an N-bit parameter value for each group.

Each N-bit value indicates a parameter value that is known to the UE.

In one embodiment, the parameter value represented by each N-bit value is fixed in the specification.

The size N may be fixed based on the number of different parameter values to be supported - N bits can indicate $2^N$ values.

In one specific embodiment, the parameter value for any group may represent the relative number of UEs assigned to the group in a probabilistic sense, applicable when a large number of UEs are camping in the cell.

The eNB configures the value for each group based on the desired relative distribution of UEs among the groups. In one example, there are two groups and the eNB configures the user equipment grouping parameters 2 and 3 for these groups, respectively. This means that the first group is assigned 2/5 of the possible UE IDs while the second group is assigned 3/5 of the possible UE IDs. Uniform distribution would result in ½ of the UEs in each group.

The $2^N$ values from N bits allow for a range of relative UE distributions among the groups and the values may be fixed based on desired relative distributions.

Let $v_i$ be a parameter value for group $i$. A relative distribution of the wireless user equipment devices among $K$

groups is proportional to the user equipment grouping parameters, and a group index for the wireless user equipment devices is determined as

$$UE\ group\ index = \begin{cases} 0, & 0 < I \le V_0 \\ i & V_{i-1} < I \le V_i,\ 1 \le i \le K-1 \end{cases}$$

where

$$I = UE\ ID \bmod(V_{K-1})$$

and

$$V_i = \sum_{j=0}^{i} v_j.$$

The user equipment grouping parameters $v_i$ may be any real values that indicate the relative number of UEs assigned to each group.

- The above equations represent non-uniform mapping of UEs to groups based on the relative weighting for each group represented by the user equipment grouping parameters $v_i$.

- For example, if the values of $v_i$ are all equal, the above equations reduce to
  *UE group index = UE ID* mod(*K*).

  ∘ In another embodiment, the parameter value for each group may be used to bias the assignment of UEs to that group when UEs are already grouped using a different method.

The assignment of wireless user equipment devices to each group may also be based on other grouping criteria.
Figure 1C illustrates an example conceptual drawing of the wake-up radio design of Figure 1B, wherein the access node transmits wake-up signals to cause wireless user equipment devices in an assigned group to monitor a control channel in response to receiving the wake-up signal, based on the grouping of the wireless user equipment devices to one of the groups associated with the wake-up signal. Receipt of the wake-up signal (WUS) triggers the UEs in the group to monitor for the different transmissions from the access node.
Figure 1D illustrates an example conceptual drawing of the wake-up radio design of Figure 1C, wherein the access node broadcasts the different transmissions a group that has been awaked by previously received wake-up signal (WUS) that has triggered the UEs in the group to monitor for the different transmissions from the access node.
The key advantages of this method include -

- The ability to alter the distribution of UEs among different groups based on certain network-configured criteria such as -

  ∘ UE ID - when distributing among groups defined as a function of the WUS multiplexing method. E.g., for a hybrid Time-Division Multiplexing/ Code-Division Multiplexing (TDM/CDM) method, more UEs can be assigned in a probabilistic sense to groups corresponding to one TDM slot relative to another.

  ∘ Expected profile - e.g. UEs of the same service type such as water meters can be grouped together as they typically would have a similar profile and may need to be woken up at the same time (e.g. for rate update). If this results in a large imbalance in size of different groups, the network can change the group assignment to reduce the imbalance.

  ∘ Coverage enhancement level - network can try to group UE with similar last known coverage enhancement level together. If this results in a large imbalance in size of different groups, the network can change the group assignment to reduce the imbalance.

## DETAILED DESCRIPTION OF THE INVENTION

In the first example embodiment of the invention, the eNB configures three UE groups for WUS. The eNB broadcasts the following parameters for the three groups in system information:

UE group index 0 $\rightarrow I_1$

UE group index 1 $\rightarrow I_2$

UE group index 2 $\rightarrow I_3$

This indicates that UE IDs in the range $I_1 \leq UE\ ID < I_2$ are assigned to group 1, UE IDs in the range $I_2 \leq UE\ ID < I_3$ are assigned to group 2 and UE IDs in the range $I_3 \leq UE\ ID$ are assigned to group 3. Each of the three UE groups is associated with one of the multiplexed WUSs. The association of the UE group with a particular WUS may either be fixed or indicated as part of the WUS configuration.

In the second example embodiment of the invention, the N bits signalled in system information for each UE group represent one of $2^N$ values possible parameter values for non-uniform UE distribution among groups. For example, N may be fixed to 2 and the user equipment grouping parameters may be fixed as in the following table.

Table 1. Example of parameter values represented by 2-bit indication for each UE group.

| 2-bit indication | Parameter value |
| --- | --- |
| 00 | 1 |
| 01 | 2 |
| 10 | 3 |
| 11 | 4 |

Thus, one of the above four values is indicated for each group. Consider a case with 4 UE groups. The eNB may configure the parameters as follows.

UE group index 0 $\rightarrow$ 01 ($v_0 = 2$)

UE group index 1 $\rightarrow$ 01 ($v_1 = 2$)

UE group index 2 $\rightarrow$ 10 ($v_2 = 3$)

UE group index 3 $\rightarrow$ 10 ($v_3 = 3$)

These parameter values indicate that for every two UEs in groups 0 and 1 should be three UEs in groups 2 and 3.

With the above configuration, the target is to realize the following fractions of UEs in the different groups.

UE group 0 $\rightarrow$ 1/5

UE group 1 $\rightarrow$ 1/5

UE group 2 $\rightarrow$ 3/10

UE group 3 $\rightarrow$ 3/10

The user equipment grouping parameters in Table 1 enable the following ratios between the number of UEs in any two groups: {1:4}, {1:3}, {1:2}, {2:3}, {3:4}, {1:1 }. If other ratios or a wider range of ratios are desirable, then the table may be suitably modified or expanded for more bits.

Consider another example where the eNB configures four UE groups for WUS. The eNB broadcasts the following parameters for the four UE groups in system information:

UE group index 0 $\rightarrow v_0 = 1$

UE group index 1 $\rightarrow v_1 = 2$

UE group index 2 → $v_0$ = 1

UE group index 3 → $v_1$ = 2

In this case,

$$V_0 = 1, V_1 = 3, V_2 = 4, V_3 = 6.$$

Assignment of group index to UEs would be as shown in the following table:

| UE ID | $I = UE\ ID\ mod(V_3)$ | UE group index |
|---|---|---|
| 0 | 0 | 0 |
| 1 | 1 | 1 |
| 2 | 2 | 1 |
| 3 | 3 | 2 |
| 4 | 4 | 3 |
| 5 | 5 | 3 |
| 6 | 0 | 0 |
| 7 | 1 | 1 |
| 8 | 2 | 1 |
| 9 | 3 | 2 |
| 10 | 4 | 3 |
| 11 | 5 | 3 |
| 12 | 0 | 0 |
| ... | ... | ... |

Thus, out of every 6 UEs, UE group indices 0 and 2 are assigned to 1 UE each whereas UE group indices 1 and 3 are assigned to 2 UEs each.

Figure 2 illustrates an example wireless network showing a functional block diagram of a wake-up radio design for an access node broadcasting a set of user equipment grouping parameters to a plurality of wireless user equipment (UEs). Assignment of UEs to groups is based on user equipment grouping parameters. The access node may be an access point, a base station, or an Evolved Node B (eNB) base station. The wireless user equipment device may be a wireless terminal or a station (STA).

Both the access node 101 and the UE 100 may include a processor 122 that may include at least one of the following: a dual or multi-core central processing unit CPU 124 and 125, a RAM memory 126, a ROM memory 127, an interface for a keypad, display, and other input/output devices, and a protocol stack 107 for communication over the network. The device includes a transceiver 118 and an application program 114.

Figure 3 illustrates the example wireless network of Figure 2, showing transmission by the access node of different wake-up signals (WUS) to be transmitted at predetermined intervals before different transmissions for the UEs in each group.

Figure 4 illustrates an example flow diagram 400 of operational steps in the access node broadcasting a set of user equipment grouping parameters to a plurality of wireless user equipment (UEs), for determining to which group each UE belongs, in accordance with at least one embodiment of the present invention. The steps of the flow diagram represent computer code instructions stored in the device's RAM and/or ROM memory, which when executed by the device's central processing units, carry out the functions of the example embodiments of the invention. The steps may be carried out in another order than shown and individual steps may be combined or separated into component steps. In some embodiments, one or more steps may be optional. The flow diagram has the following steps:

Step 402: transmitting, by an access node, wireless user equipment grouping parameters, to a plurality of wireless

7

user equipment devices, the user equipment grouping parameters configuring how the plurality of wireless user equipment devices are to be organized into groups associated with different wake-up signals to be transmitted by the access node at predetermined intervals before different transmissions from the access node are received by the wireless user equipment devices, to indicate to the wireless user equipment devices when to monitor a control channel in response to receiving a wake-up signal, prior to the different transmissions from the access node;

Step 404: wherein the assignment of wireless user equipment devices to each group, is based on the user equipment grouping parameters; and

Step 406: transmitting, by the access node, a wake-up signal to cause wireless user equipment devices in an assigned group to monitor a control channel in response to receiving the wake-up signal, based on the grouping of the wireless user equipment device to one of the groups associated with the wake-up signal;

wherein the user equipment grouping parameters comprise a relative number of wireless devices separately for each group.

Figure 5 illustrates an example flow diagram 500 of operational steps in the receiving by the UEs of different wake-up signals (WUS) to be received at predetermined intervals before different transmissions for the UEs in each group, in accordance with at least one embodiment of the present invention. The steps of the flow diagram represent computer code instructions stored in the device's RAM and/or ROM memory, which when executed by the device's central processing units, carry out the functions of the example embodiments of the invention. The steps may be carried out in another order than shown and individual steps may be combined or separated into component steps. In some embodiments, one or more steps may be optional. The flow diagram has the following steps:

Step 502: receiving, by a wireless user equipment device that is one of a plurality of wireless user equipment devices, user equipment grouping parameters for group assignment, which configure how the plurality of wireless user equipment devices are to be organized into groups associated with different wake-up signals to be received from an access node at predetermined intervals before different transmissions are received from the access node, to indicate to the wireless user equipment device when to monitor a control channel in response to receiving a wake-up signal, prior to monitoring the different transmissions received from the access node;
Step 504: wherein the assignment of wireless user equipment devices to each group, is based on the user equipment grouping parameters; and
Step 506: monitoring, by the wireless user equipment device, a control channel in response to receiving the wake-up signal, based on the grouping of the wireless user equipment device to one of the groups associated with the wake-up signal;
wherein the user equipment grouping parameters comprise a relative number of wireless devices separately for each group.

Figure 6 illustrates an example embodiment of the invention, wherein examples of removable storage media 126 are shown, based on magnetic, electronic and/or optical technologies, such as magnetic disks, optical disks, semiconductor memory circuit devices and micro-SD memory cards (SD refers to the Secure Digital standard) for storing data and/or computer program code as an example computer program product, in accordance with an example embodiment of the invention.
Although specific example embodiments have been disclosed, a person skilled in the art will understand that changes can be made to the specific example embodiments without departing from the scope of the invention.

## Claims

1. A method for wireless communication, comprising:

    receiving (502), by a wireless user equipment device (100) that is one of a plurality of wireless user equipment devices, user equipment grouping parameters (105A-D) for group assignment, which configure how the plurality of wireless user equipment devices are to be organized into groups (103A-D) associated with different wake-up signals to be received from an access node (101) at predetermined intervals before different transmissions are received from the access node, to indicate to the wireless user equipment device when to monitor a control channel in response to receiving a wake-up signal, prior to monitoring the different transmissions received from the access node;

wherein the assignment of wireless user equipment devices to each group is based on the user equipment grouping parameters; and

monitoring (506), by the wireless user equipment device, a control channel in response to receiving the wake-up signal, based on the grouping of the wireless user equipment device to one of the groups associated with the wake-up signal;

wherein the user equipment grouping parameters comprise a relative number of wireless devices per each group, wherein $v_i$ is a parameter value for group $i$, a relative distribution of the wireless user equipment devices among $K$ groups is proportional to the user equipment grouping parameters, and a group index for the wireless user equipment devices is determined as

$$UE\ group\ index = \begin{cases} 0, & 0 < I \le V_0 \\ i & V_{i-1} < I \le V_i,\ 1 \le i \le K-1 \end{cases}$$

where

$$I = UE\ ID\ \mathrm{mod}(V_{K-1})$$

and

$$V_i = \sum_{j=0}^{i} v_j.$$

2. A method for wireless communication, comprising:

transmitting (402), by an access node (101), wireless user equipment grouping parameters, to a plurality of wireless user equipment devices (100), the user equipment grouping parameters (105A-D) configuring how the plurality of wireless user equipment devices are to be organized into groups (103A-D) associated with different wake-up signals to be transmitted by the access node at predetermined intervals before different transmissions from the access node are received by the wireless user equipment devices, to indicate to the wireless user equipment devices when to monitor a control channel in response to receiving a wake-up signal, prior to the different transmissions from the access node;

wherein the assignment of wireless user equipment devices to each group is based on the user equipment grouping parameters; and

transmitting (406), by the access node, a wake-up signal to cause wireless user equipment devices in an assigned group to monitor a control channel in response to receiving the wake-up signal, based on the grouping of the wireless user equipment device to one of the groups associated with the wake-up signal;

wherein the user equipment grouping parameters comprise a relative number of wireless devices per each group, wherein $v_i$ is a parameter value for group $i$, a relative distribution of the wireless user equipment devices among $K$ groups is proportional to the user equipment grouping parameters, and a group index for the wireless user equipment devices is determined as

$$UE\ group\ index = \begin{cases} 0, & 0 < I \le V_0 \\ i & V_{i-1} < I \le V_i,\ 1 \le i \le K-1 \end{cases}$$

where

$$I = UE\ ID\ \mathrm{mod}(V_{K-1})$$

and

$$V_i = \sum_{j=0}^{i} v_j.$$

3. The method of any of claims 1 or 2, wherein the user equipment grouping parameters comprise, for each group, at least one of the first identity and the last identity from a range of identities of wireless user equipment devices assigned to the group.

4. The method of any of claims 1 to 3, wherein the assignment of wireless user equipment devices to each group is also based on service types or coverage enhancement levels of the wireless user equipment devices.

5. The method of any of claims 1 to 4, wherein the relative number of wireless devices per each group indicates the desired relative distribution of the wireless user equipment devices among the groups.

6. The method of any of claims 1 to 5, wherein the access node is an access point, a base station, or an Evolved Node B, eNB, base station, and the wireless user equipment device is a terminal or a station, STA.

7. A user equipment (100), comprising:

means for receiving, by the wireless user equipment device that is one of a plurality of wireless user equipment devices, user equipment grouping parameters (105A-D) for group assignment, which configure how the plurality of wireless user equipment devices are to be organized into groups (103A-D) associated with different wake-up signals to be received from an access node (101) at predetermined intervals before different transmissions are received from the access node, to indicate to the wireless user equipment device when to monitor a control channel in response to receiving a wake-up signal, prior to monitoring the different transmissions received from the access node;
wherein the assignment of wireless user equipment devices to each group is based on the user equipment grouping parameters; and
means for monitoring, by the wireless user equipment device, a control channel in response to receiving the wake-up signal, based on the grouping of the wireless user equipment device to one of the groups associated with the wake-up signal;
wherein the user equipment grouping parameters comprise a relative number of wireless devices per each group, wherein $v_i$ is a parameter value for group $i$, a relative distribution of the wireless user equipment devices among $K$ groups is proportional to the user equipment grouping parameters, and a group index for the wireless user equipment devices is determined as

$$UE\ group\ index = \begin{cases} 0, & 0 < I \le V_0 \\ i & V_{i-1} < I \le V_i, \ 1 \le i \le K-1 \end{cases}$$

where

$$I = UE\ ID\ \mathrm{mod}(V_{K-1})$$

and

$$V_i = \sum_{j=0}^{i} v_j.$$

8. An access node (101), comprising:

means for transmitting, by the access node, wireless user equipment grouping parameters (105A-D), to a plurality of wireless user equipment devices (100), the user equipment grouping parameters configuring how the plurality of wireless user equipment devices are to be organized into groups (103A-D) associated with different wake-up signals to be transmitted by the access node at predetermined intervals before different transmissions from the access node are received by the wireless user equipment devices, to indicate to the wireless user equipment devices when to monitor a control channel in response to receiving a wake-up signal, prior to the different transmissions from the access node;
wherein the assignment of wireless user equipment devices to each group is based on the user equipment grouping parameters; and
means for transmitting, by the access node, a wake-up signal to cause wireless user equipment devices in an assigned group to monitor a control channel in response to receiving the wake-up signal, based on the grouping of the wireless user equipment device to one of the groups associated with the wake-up signal;

wherein the user equipment grouping parameters comprise a relative number of wireless devices per each group, wherein $v_i$ is a parameter value for group $i$, a relative distribution of the wireless user equipment devices among $K$ groups is proportional to the user equipment grouping parameters, and a group index for the wireless user equipment devices is determined as

$$UE\ group\ index = \begin{cases} 0, & 0 < I \leq V_0 \\ i & V_{i-1} < I \leq V_i, \ 1 \leq i \leq K-1 \end{cases}$$

where

$$I = UE\ ID \bmod(V_{K-1})$$

and

$$V_i = \sum_{j=0}^{i} v_j.$$

9. The user equipment or access node of any of claims 7 or 8, wherein the user equipment grouping parameters comprise, for each group, at least one of the first identity and the last identity from a range of identities of wireless user equipment devices assigned to the group.

10. The user equipment or access node of any of claims 7 to 9, wherein the assignment of wireless user equipment devices to each group is also based on service types or coverage enhancement levels of the wireless user equipment devices.

11. The user equipment or access node of any of claims 7 to 10, wherein the relative number of wireless devices per each group indicates the desired relative distribution of the wireless user equipment devices among the groups.

12. The user equipment or access node of any of claims 7 to 11, wherein the access node is an access point, a base station, or an Evolved Node B, eNB, base station, and the wireless user equipment device is a terminal or a station, STA.

**Patentansprüche**

1. Verfahren für eine drahtlose Kommunikation, das Folgendes umfasst:

Empfangen (502) durch eine drahtlose Teilnehmereinrichtungsvorrichtung (100), die eine einer Vielzahl von drahtlosen Teilnehmereinrichtungsvorrichtungen ist, von Teilnehmereinrichtungsgruppierungsparametern (105A-D) für eine Gruppenzuweisung, die auslegen, wie eine Vielzahl von drahtlosen Teilnehmereinrichtungsvorrichtungen in Gruppen (103A-D) zu gruppieren sind, die mit verschiedenen Wecksignalen verknüpft sind, die von einem Zugangsknoten (101) zu vorbestimmten Intervallen zu empfangen sind, bevor verschiedene Übertragungen vom Zugangsknoten empfangen werden, um einer drahtlosen Teilnehmereinrichtungsvorrichtung anzuzeigen, wann in Reaktion auf das Empfangen eines Wecksignals vor Überwachen der verschiedenen vom Zugangsknoten empfangenen Übertragungen ein Steuerkanal zu überwachen ist; wobei die Zuweisung von drahtlosen Teilnehmereinrichtungsvorrichtungen zu jeder Gruppe auf den Teilnehmereinrichtungsgruppierungsparametern basiert; und Überwachen (506) eines Steuerkanals durch die drahtlose Teilnehmereinrichtungsvorrichtung in Reaktion auf das Empfangen des Wecksignals auf Basis der Gruppierung der drahtlosen Teilnehmereinrichtungsvorrichtung in eine der Gruppen, die mit dem Wecksignal verknüpft sind; wobei die Teilnehmereinrichtungsgruppierungsparameter pro Gruppe eine relative Anzahl von drahtlosen Vorrichtungen umfassen, wobei $v_i$ ein Parameterwert für Gruppe $i$ ist, eine relative Verteilung der drahtlosen Teilnehmereinrichtungsvorrichtungen unter $K$ Gruppen sich proportional zu den Teilnehmereinrichtungsgruppierungsparametern verhält und ein Gruppenindex für die drahtlosen Teilnehmereinrichtungsvorrichtungen wie folgt bestimmt wird

WO

$$UE - Gruppenindex = \begin{cases} 0, & 0 < I \leq V_0 \\ i & V_{i-1} < I \leq V_i, \ 1 \leq i \leq K-1 \end{cases}$$

und

$$I = UE\ ID\ mod\ (V_{K-1})$$

$$V_i = \sum_{j=0}^{i} v_j.$$

2. Verfahren für eine drahtlose Kommunikation, das Folgendes umfasst:

Übertragen (402) von drahtlosen Teilnehmereinrichtungsgruppierungsparametern durch einen Zugangsknoten (101) zu einer Vielzahl von drahtlosen Teilnehmereinrichtungsvorrichtungen (100), wobei die Teilnehmereinrichtungsgruppierungsparameter (105A-D) auslegen, wie die Vielzahl von drahtlosen Teilnehmereinrichtungsvorrichtungen in Gruppen (103A-D) zu gruppieren sind, die mit verschiedenen Wecksignalen verknüpft sind, die vom Zugangsknoten zu vorbestimmten Intervallen zu übertragen sind, bevor verschiedene Übertragungen vom Zugangsknoten von den drahtlosen Teilnehmereinrichtungsvorrichtungen empfangen werden, um den drahtlosen Teilnehmereinrichtungsvorrichtungen anzuzeigen, wann in Reaktion auf das Empfangen eines Wecksignals vor den verschiedenen Übertragungen vom Zugangsknoten ein Steuerkanal zu überwachen ist; wobei die Zuweisung von drahtlosen Teilnehmereinrichtungsvorrichtungen zu jeder Gruppe auf den Teilnehmereinrichtungsgruppierungsparametern basiert; und
Übertragen (406) eines Wecksignals durch den Zugangsknoten, um drahtlose Teilnehmereinrichtungsvorrichtungen in einer zugewiesenen Gruppe zu veranlassen, einen Steuerkanal in Reaktion auf das Empfangen des Wecksignals auf Basis der Gruppierung der drahtlosen Teilnehmereinrichtungsvorrichtung in eine der Gruppen, die mit dem Wecksignal verknüpft sind, zu überwachen; wobei die Teilnehmereinrichtungsgruppierungsparameter eine relative Anzahl von drahtlosen Vorrichtungen pro Gruppe umfassen, wobei $v_i$ ein Parameterwert für Gruppe $i$ ist, eine relative Verteilung der drahtlosen Teilnehmereinrichtungsvorrichtungen unter $K$ Gruppen sich proportional zu den Teilnehmereinrichtungsgruppierungsparametern verhält und ein Gruppenindex für die drahtlosen Teilnehmereinrichtungsvorrichtungen wie folgt bestimmt wird

$$UE - Gruppenindex = \begin{cases} 0, & 0 < I \leq V_0 \\ i & V_{i-1} < I \leq V_i, \ 1 \leq i \leq K-1 \end{cases}$$

WO

$$I = UE\ ID\ mod\ (V_{K-1})$$

und

$$V_i = \sum_{j=0}^{i} v_j.$$

3. Verfahren nach einem der Ansprüche 1 oder 2, wobei die Teilnehmereinrichtungsgruppierungsparameter für jede Gruppe mindestens eine der ersten Identität und der letzten Identität aus einem Bereich von Identitäten von drahtlosen Teilnehmereinrichtungsvorrichtungen umfassen, die der Gruppe zugewiesen sind.

4. Verfahren nach einem der Ansprüche 1 bis 3, wobei die Zuweisung von drahtlosen Teilnehmereinrichtungsvorrichtungen zu jeder Gruppe auch auf Dienstarten oder Abdeckungsverbesserungsniveaus der drahtlosen Teilnehmereinrichtungsvorrichtungen basiert.

5. Verfahren nach einem der Ansprüche 1 bis 4, wobei die relative Anzahl von drahtlosen Vorrichtungen pro Gruppe die gewünschte relative Verteilung der drahtlosen Teilnehmereinrichtungsvorrichtungen unter den Gruppen anzeigt.

6. Verfahren nach einem der Ansprüche 1 bis 5, wobei der Zugangsknoten ein Zugangspunkt, eine Basisstation oder eine Evolved-Node-B(eNB)-Basisstation ist und die drahtlose Teilnehmereinrichtungsvorrichtung ein Endgerät oder eine Station, STA, ist.

7. Teilnehmereinrichtung (100), die Folgendes umfasst:

Mittel zum Empfangen durch die drahtlose Teilnehmereinrichtungsvorrichtung, die eine einer Vielzahl von drahtlosen Teilnehmereinrichtungsvorrichtungen ist von Teilnehmereinrichtungsgruppierungsparametern (105A-D) für eine Gruppenzuweisung, die auslegen, wie eine Vielzahl von drahtlosen Teilnehmereinrichtungsvorrichtungen in Gruppen (103A-D) zu gruppieren sind, die mit verschiedenen Wecksignalen verknüpft sind, die von einem Zugangsknoten (101) zu vorbestimmten Intervallen zu empfangen sind, bevor verschiedene Übertragungen vom Zugangsknoten empfangen werden, um einer drahtlosen Teilnehmereinrichtungsvorrichtung anzuzeigen, wann in Reaktion auf das Empfangen eines Wecksignals vor Überwachen der verschiedenen vom Zugangsknoten empfangenen Übertragungen ein Steuerkanal zu überwachen ist;
wobei die Zuweisung von drahtlosen Teilnehmereinrichtungsvorrichtungen zu jeder Gruppe auf den Teilnehmereinrichtungsgruppierungsparametern basiert; und
Mittel zum Überwachen eines Steuerkanals durch die drahtlose Teilnehmereinrichtungsvorrichtung in Reaktion auf das Empfangen des Wecksignals auf Basis der Gruppierung der drahtlosen Teilnehmereinrichtungsvorrichtung in eine der Gruppen, die mit dem Wecksignal verknüpft sind;
wobei die Teilnehmereinrichtungsgruppierungsparameter eine relative Anzahl von drahtlosen Vorrichtungen pro Gruppe umfassen, wobei $v_i$ ein Parameterwert für Gruppe $i$ ist, eine relative Verteilung der drahtlosen Teilnehmereinrichtungsvorrichtungen unter $K$ Gruppen sich proportional zu den Teilnehmereinrichtungsgruppierungsparametern verhält und ein Gruppenindex für die drahtlosen Teilnehmereinrichtungsvorrichtungen wie folgt bestimmt wird

$$UE - Gruppenindex = \begin{cases} 0, & 0 < I \le V_0 \\ i & V_{i-1} < I \le V_i, \ 1 \le i \le K - 1 \end{cases}$$

wo

$$I = UE\ ID\ mod\ (V_{K-1})$$

und

$$V_i = \sum_{j=0}^{i} v_j .$$

8. Zugangsknoten (101), der Folgendes umfasst:

Mittel zum Übertragen von drahtlosen Teilnehmereinrichtungsgruppierungsparametern (105A-D) durch den Zugangsknoten zu einer Vielzahl von drahtlosen Teilnehmereinrichtungsvorrichtungen (100), wobei die Teilnehmereinrichtungsgruppierungsparameter auslegen, wie die Vielzahl von drahtlosen Teilnehmereinrichtungsvorrichtungen in Gruppen (103A-D) zu gruppieren sind, die mit verschiedenen Wecksignalen verknüpft sind, die vom Zugangsknoten zu vorbestimmten Intervallen zu übertragen sind, bevor verschiedene Übertragungen vom Zugangsknoten von den drahtlosen Teilnehmereinrichtungsvorrichtungen empfangen werden, um den drahtlosen Teilnehmereinrichtungsvorrichtungen anzuzeigen, wann in Reaktion auf das Empfangen eines Wecksignals vor den verschiedenen Übertragungen vom Zugangsknoten ein Steuerkanal zu überwachen ist;
wobei die Zuweisung von drahtlosen Teilnehmereinrichtungsvorrichtungen zu jeder Gruppe auf den Teilnehmereinrichtungsgruppierungsparametern basiert; und
Mittel zum Übertragen eines Wecksignals durch den Zugangsknoten, um drahtlose Teilnehmereinrichtungsvorrichtungen in einer zugewiesenen Gruppe zu veranlassen, einen Steuerkanal in Reaktion auf das Empfangen des Wecksignals auf Basis der Gruppierung der drahtlosen Teilnehmereinrichtungsvorrichtung in eine der Gruppen, die mit dem Wecksignal verknüpft sind, zu überwachen;

wobei die Teilnehmereinrichtungsgruppierungsparameter eine relative Anzahl von drahtlosen Vorrichtungen pro Gruppe umfassen, wobei $v_i$ ein Parameterwert für Gruppe $i$ ist, eine relative Verteilung der drahtlosen Teilnehmereinrichtungsvorrichtungen unter $K$ Gruppen sich proportional zu den Teilnehmereinrichtungsgruppierungsparametern verhält und ein Gruppenindex für die drahtlosen Teilnehmereinrichtungsvorrichtungen wie folgt bestimmt wird

$$UE - Gruppenindex = \begin{cases} 0, & 0 < I \leq V_0 \\ i & V_{i-1} < I \leq V_i, \ 1 \leq i \leq K-1 \end{cases}$$

WO

$$I = UE\ ID\ mod\ (V_{K-1})$$

und

$$V_i = \sum_{j=0}^{i} v_j\,.$$

9. Teilnehmereinrichtung oder Zugangsknoten nach einem der Ansprüche 7 oder 8, wobei die Teilnehmereinrichtungsgruppierungsparameter für jede Gruppe mindestens eine der ersten Identität und der letzten Identität aus einem Bereich von Identitäten von drahtlosen Teilnehmereinrichtungsvorrichtungen umfassen, die der Gruppe zugewiesen sind.

10. Teilnehmereinrichtung oder Zugangsknoten nach einem der Ansprüche 7 bis 9, wobei die Zuweisung von drahtlosen Teilnehmereinrichtungsvorrichtungen zu jeder Gruppe auch auf Dienstarten oder Abdeckungsverbesserungsniveaus der drahtlosen Teilnehmereinrichtungsvorrichtungen basiert.

11. Teilnehmereinrichtung oder Zugangsknoten nach einem der Ansprüche 7 bis 10, wobei die relative Anzahl von drahtlosen Vorrichtungen pro Gruppe die gewünschte relative Verteilung der drahtlosen Teilnehmereinrichtungsvorrichtungen unter den Gruppen anzeigt.

12. Teilnehmereinrichtung oder Zugangsknoten nach einem der Ansprüche 7 bis 11, wobei der Zugangsknoten ein Zugangspunkt, eine Basisstation oder eine Evolved-Node-B(eNB)-Basisstation ist und die drahtlose Teilnehmereinrichtungsvorrichtung ein Endgerät oder eine Station, STA, ist.

**Revendications**

1. Procédé de communication sans fil, comprenant :

la réception (502), par un dispositif d'équipement utilisateur sans fil (100) qui est l'un d'une pluralité de dispositifs d'équipements utilisateurs sans fil, de paramètres de regroupement d'équipements utilisateurs (105A-D) pour une attribution de groupe qui configurent la manière dont la pluralité de dispositifs d'équipements utilisateurs sans fil doivent être organisés en groupes (103A-D) associés à différents signaux de réveil à recevoir d'un noeud d'accès (101) à des intervalles prédéterminés avant que différentes transmissions ne soient reçues du noeud d'accès, afin d'indiquer au dispositif d'équipement utilisateur sans fil quand surveiller un canal de contrôle en réponse à la réception d'un signal de réveil avant de surveiller les différentes transmissions reçues du noeud d'accès ;
dans lequel l'attribution de dispositifs d'équipements utilisateurs sans fil à chaque groupe est basée sur les paramètres de regroupement d'équipements utilisateurs ; et
la surveillance (506), par le dispositif d'équipement utilisateur sans fil, d'un canal de contrôle en réponse à la réception du signal de réveil, sur la base du regroupement du dispositif d'équipement utilisateur sans fil dans l'un des groupes associés au signal de réveil ;
dans lequel les paramètres de regroupement d'équipements utilisateurs comprennent un nombre relatif de dispositifs sans fil pour chaque groupe, dans lequel $v_i$ est une valeur de paramètre pour un groupe i, une distribution relative des dispositifs d'équipements utilisateurs sans fil sur K groupes est proportionnelle aux paramètres de regroupement d'équipements utilisateurs, et un indice de groupe pour les dispositifs d'équipements utilisateurs sans fil est déterminé comme suit

$$UE\ indice\ de\ groupe = \begin{cases} 0, & 0 < I \leq V_0 \\ i & V_{i-1} < I \leq V_i, \ 1 \leq i \leq K-1 \end{cases}$$

où

$$I = UE\ ID\ mod(V_{K-1})$$

et

$$V_i = \sum_{j=0}^{i} v_j\ .$$

2.   Procédé de communication sans fil, comprenant :

la transmission (402), par un noeud d'accès (101), de paramètres de regroupement d'équipements utilisateurs sans fil à une pluralité de dispositifs d'équipements utilisateurs sans fil (100), les paramètres de regroupement d'équipements utilisateurs (105A-D) configurant la manière dont la pluralité de dispositifs d'équipements utilisateurs sans fil doivent être organisés en groupes (103A-D) associés à différents signaux de réveil à transmettre par le noeud d'accès à des intervalles prédéterminés avant que différentes transmissions du noeud d'accès ne soient reçues par les dispositifs d'équipements utilisateurs sans fil, afin d'indiquer aux dispositifs d'équipements utilisateurs sans fil quand surveiller un canal de contrôle en réponse à la réception d'un signal de réveil avant les différentes transmissions du noeud d'accès ;
dans lequel l'attribution de dispositifs d'équipements utilisateurs sans fil à chaque groupe est basée sur les paramètres de regroupement d'équipements utilisateurs ; et
la transmission (406), par le noeud d'accès, d'un signal de réveil pour amener des dispositifs d'équipements utilisateurs dans un groupe attribué à surveiller un canal de contrôle en réponse à la réception du signal de réveil, sur la base du regroupement du dispositif d'équipement utilisateur sans fil dans l'un des groupes associés au signal de réveil ;
dans lequel les paramètres de regroupement d'équipements utilisateurs comprennent un nombre relatif de dispositifs sans fil pour chaque groupe, dans lequel $v_i$ est une valeur de paramètre pour un groupe i, une distribution relative des dispositifs d'équipements utilisateurs sans fil sur K groupes est proportionnelle aux paramètres de regroupement d'équipements utilisateurs, et un indice de groupe pour les dispositifs d'équipements utilisateurs sans fil est déterminé comme suit

$$UE\ indice\ de\ groupe = \begin{cases} 0, & 0 < I \leq V_0 \\ i & V_{i-1} < I \leq V_i, \ 1 \leq i \leq K-1 \end{cases}$$

où

$$I = UE\ ID\ mod(V_{K-1})$$

et

$$V_i = \sum_{j=0}^{i} v_j\ .$$

3.   Procédé selon l'une des revendications 1 ou 2, dans lequel les paramètres de regroupement d'équipements utilisateurs comprennent, pour chaque groupe, au moins une parmi la première identité et la dernière identité d'une plage d'identités de dispositifs d'équipements utilisateurs sans fil attribués au groupe.

4.   Procédé selon l'une des revendications 1 à 3, dans lequel l'attribution de dispositifs d'équipements utilisateurs sans fil à chaque groupe est également basée sur des types de service ou des niveaux d'amélioration de couverture des dispositifs d'équipements utilisateurs sans fil.

5. Procédé selon l'une des revendications 1 à 4, dans lequel le nombre relatif des dispositifs sans fil pour chaque groupe indique la distribution relative souhaitée des dispositifs d'équipements utilisateurs sans fil sur les groupes.

6. Procédé selon l'une des revendications 1 à 5, dans lequel le noeud d'accès est un point d'accès, une station de base, ou une station de base de noeud B évolué, eNB, et le dispositif d'équipement utilisateur sans fil est un terminal ou une station, STA.

7. Équipement utilisateur (100), comprenant :

des moyens pour recevoir, par le dispositif d'équipement utilisateur sans fil qui est l'un d'une pluralité de dispositifs d'équipements utilisateurs sans fil, des paramètres de regroupement d'équipements utilisateurs (105A-D) pour une attribution de groupe qui configurent la manière dont la pluralité de dispositifs d'équipements utilisateurs sans fil doivent être organisés en groupes (103A-D) associés à différents signaux de réveil à recevoir d'un noeud d'accès (101) à des intervalles prédéterminés avant que différentes transmissions ne soient reçues du noeud d'accès, afin d'indiquer au dispositif d'équipement utilisateur sans fil quand surveiller un canal de contrôle en réponse à la réception d'un signal de réveil avant de surveiller les différentes transmissions reçues du noeud d'accès ;
dans lequel l'attribution de dispositifs d'équipements utilisateurs sans fil à chaque groupe est basée sur les paramètres de regroupement d'équipements utilisateurs ; et
des moyens pour surveiller, par le dispositif d'équipement utilisateur sans fil, un canal de contrôle en réponse à la réception du signal de réveil, sur la base du regroupement du dispositif d'équipement utilisateur sans fil dans l'un des groupes associés au signal de réveil ;
dans lequel les paramètres de regroupement d'équipements utilisateurs comprennent un nombre relatif de dispositifs sans fil pour chaque groupe, dans lequel $v_i$ est une valeur de paramètre pour un groupe i, une distribution relative des dispositifs d'équipements utilisateurs sans fil sur K groupes est proportionnelle aux paramètres de regroupement d'équipements utilisateurs, et un indice de groupe pour les dispositifs d'équipements utilisateurs sans fil est déterminé comme suit

$$UE\ indice\ de\ groupe = \begin{cases} 0, & 0 < I \le V_0 \\ i & V_{i-1} < I \le V_i, \ 1 \le i \le K-1 \end{cases}$$

où

$$I = UE\ ID\ mod(V_{K-1})$$

et

$$V_i = \sum_{j=0}^{i} v_j .$$

8. Noeud d'accès (101), comprenant :

des moyens pour transmettre, par le noeud d'accès, des paramètres de regroupement d'équipements utilisateurs sans fil (105A-D) à une pluralité de dispositifs d'équipements utilisateurs sans fil (100), les paramètres de regroupement d'équipements utilisateurs configurant la manière dont la pluralité de dispositifs d'équipements utilisateurs sans fil doivent être organisés en groupes (103A-D) associés à différents signaux de réveil à transmettre par le noeud d'accès à des intervalles prédéterminés avant que différentes transmissions du noeud d'accès ne soient reçues par les dispositifs d'équipements utilisateurs sans fil, afin d'indiquer aux dispositifs d'équipements utilisateurs sans fil quand surveiller un canal de contrôle en réponse à la réception d'un signal de réveil avant les différentes transmissions du noeud d'accès ;
dans lequel l'attribution de dispositifs d'équipements utilisateurs sans fil à chaque groupe est basée sur les paramètres de regroupement d'équipements utilisateurs ; et
des moyens pour transmettre, par le noeud d'accès, un signal de réveil pour amener des dispositifs d'équipements utilisateurs sans fil dans un groupe attribué à surveiller un canal de contrôle en réponse à la réception du signal de réveil, sur la base du regroupement du dispositif d'équipement utilisateur sans fil dans l'un des groupes associés au signal de réveil ;

dans lequel les paramètres de regroupement d'équipements utilisateurs comprennent un nombre relatif de dispositifs sans fil pour chaque groupe, dans lequel $v_i$ est une valeur de paramètre pour un groupe i, une distribution relative des dispositifs d'équipements utilisateurs sans fil sur K groupes est proportionnelle aux paramètres de regroupement d'équipements utilisateurs, et un indice de groupe pour les dispositifs d'équipements utilisateurs sans fil est déterminé comme suit

$$UE\ indice\ de\ groupe = \begin{cases} 0, & 0 < I \leq V_0 \\ i & V_{i-1} < I \leq V_i, \ 1 \leq i \leq K-1 \end{cases}$$

où

$$I = UE\ ID\ mod(V_{K-1})$$

et

$$V_i = \sum_{j=0}^{i} v_j \, .$$

9. Équipement utilisateur ou noeud d'accès selon l'une des revendications 7 ou 8, dans lequel les paramètres de regroupement d'équipements utilisateurs comprennent, pour chaque groupe, au moins une parmi la première identité et la dernière identité d'une plage d'identités de dispositifs d'équipements utilisateurs sans fil attribués au groupe.

10. Équipement utilisateur ou noeud d'accès selon l'une des revendications 7 à 9, dans lequel l'attribution de dispositifs d'équipements utilisateurs sans fil à chaque groupe est également basée sur des types de service ou des niveaux d'amélioration de couverture des dispositifs d'équipements utilisateurs sans fil.

11. Équipement utilisateur ou noeud d'accès selon l'une des revendications 7 à 10, dans lequel le nombre relatif des dispositifs sans fil pour chaque groupe indique la distribution relative souhaitée des dispositifs d'équipements utilisateurs sans fil sur les groupes.

12. Équipement utilisateur ou noeud d'accès selon l'une des revendications 7 à 11, dans lequel le noeud d'accès est un point d'accès, une station de base, ou une station de base de noeud B évolué, eNB, et le dispositif d'équipement utilisateur sans fil est un terminal ou une station, STA.

FIG. 1A

UE DEVICE 100D2

UE DEVICE 100D4

UE DEVICE 100D1

UE DEVICE 100D3

UE DATA COLLECTION

UE DEVICE 100C2

UE DEVICE 100C3

UE DEVICE 100C1

UE DATA COLLECTION

eNB BASE STATION 101

UE DEVICE 100B2

UE DEVICE 100B1

UE DATA COLLECTION

UE DATA COLLECTION

UE DEVICE 100A1

EP 3 874 807 B1

FIG. 1B

GROUP 103C
UE DEVICE 100C1
UE DEVICE 100C2
UE DEVICE 100C3

GROUP 103D
UE DEVICE 100D1
UE DEVICE 100D2
UE DEVICE 100D3
UE DEVICE 100D4

GROUP 103A
UE DEVICE 100A1

GROUP 103B
UE DEVICE 100B1
UE DEVICE 100B2

eNB BASE STATION 101

UE GROUPING PARAMETERS 105A
UE GROUPING PARAMETERS 105B
UE GROUPING PARAMETERS 105C
UE GROUPING PARAMETERS 105D

19

# FIG. 1C

GROUP
103D

UE DEVICE
100D1

UE DEVICE
100D2

UE DEVICE
100D3

UE DEVICE
100D4

WAKE-UP

GROUP
103A

WAKE-UP SIGNAL

eNB BASE
STATION
101

UE DEVICE
100A1

NOT AWAKE

UE DEVICE
100C2

UE DEVICE
100C1

UE DEVICE
100C3

NOT AWAKE

GROUP
103C

GROUP
103B

UE DEVICE
100B1

UE DEVICE
100B2

NOT AWAKE

EP 3 874 807 B1

20

# FIG. 1D

eNB BASE STATION 101

GROUP 103D
UE DEVICE 100D1
UE DEVICE 100D2
UE DEVICE 100D3
UE DEVICE 100D4
AWAKE

GROUP 103C
UE DEVICE 100C1
UE DEVICE 100C2
UE DEVICE 100C3
NOT AWAKE

GROUP 103B
UE DEVICE 100B1
UE DEVICE 100B2
NOT AWAKE

GROUP 103A
UE DEVICE 100A1
NOT AWAKE

MONITOR A CONTROL CHANNEL IN DIFFERENT TRANSMISSIONS

EP 3 874 807 B1

FIG. 2

WIRELESS USER EQUIPMENT DEVICE 100

APPLICATION 114'

PROTOCOL STACK 107'

RADIO 118

CPU 124 · CPU 125 · RAM 126 · ROM 127 · INTERFC. CKTS 128

122

ASSIGNMENT OF UES TO GROUPS BASED ON USER EQUIPMENT GROUPING PARAMETERS

UE GROUPING PARAMETERS

105

WIRELESS ACCESS NODE 101

APPLICATION 114

PROTOCOL STACK 107

RADIO 118

CPU 124 · CPU 125 · RAM 126 · ROM 127 · INTERFC. CKTS 128

122

22

# FIG. 3

**WIRELESS ACCESS NODE 101**

| CPU 124 | ⟷ | APPLICATION 114 |
| CPU 125 | 122 | |
| RAM 126 | ⟷ | PROTOCOL STACK 107 |
| ROM 127 | | RADIO 118 |
| INTERFC. CKTS 128 | | |

WAKE-UP SIGNALS (WUS) ⟹

**WIRELESS USER EQUIPMENT DEVICE 100**

| CPU 124 | ⟷ | APPLICATION 114' |
| CPU 125 | 122 | |
| RAM 126 | ⟷ | PROTOCOL STACK 107' |
| ROM 127 | | RADIO 118 |
| INTERFC. CKTS 128 | | |

# FIG. 4

OPERATIONAL STEPS IN THE ACCESS NODE

400

STEP 402: TRANSMITTING, BY AN ACCESS NODE, WIRELESS USER EQUIPMENT GROUPING PARAMETERS, TO A PLURALITY OF WIRELESS USER EQUIPMENT DEVICES, THE USER EQUIPMENT GROUPING PARAMETERS CONFIGURING HOW THE PLURALITY OF WIRELESS USER EQUIPMENT DEVICES ARE TO BE ORGANIZED INTO GROUPS ASSOCIATED WITH DIFFERENT WAKE-UP SIGNALS TO BE TRANSMITTED BY THE ACCESS NODE AT PREDETERMINED INTERVALS BEFORE DIFFERENT TRANSMISSIONS FROM THE ACCESS NODE ARE RECEIVED BY THE WIRELESS USER EQUIPMENT DEVICES, TO INDICATE TO THE WIRELESS USER EQUIPMENT DEVICES WHEN TO MONITOR A CONTROL CHANNEL IN RESPONSE TO RECEIVING A WAKE-UP SIGNAL, PRIOR TO THE DIFFERENT TRANSMISSIONS FROM THE ACCESS NODE;

STEP 404: WHEREIN THE ASSIGNMENT OF WIRELESS USER EQUIPMENT DEVICES TO EACH GROUP, IS BASED ON THE USER EQUIPMENT GROUPING PARAMETERS; AND

STEP 406: TRANSMITTING, BY THE ACCESS NODE, A WAKE-UP SIGNAL TO CAUSE WIRELESS USER EQUIPMENT DEVICES IN AN ASSIGNED GROUP TO MONITOR A CONTROL CHANNEL IN RESPONSE TO RECEIVING THE WAKE-UP SIGNAL, BASED ON THE GROUPING OF THE WIRELESS USER EQUIPMENT DEVICE TO ONE OF THE GROUPS ASSOCIATED WITH THE WAKE-UP SIGNAL.

WHEREIN THE USER EQUIPMENT GROUPING PARAMETERS COMPRISE A RELATIVE NUMBER OF WIRELESS DEVICES SEPARATELY FOR EACH GROUP.

# FIG. 5

OPERATIONAL STEPS IN THE UES

500

STEP 502: RECEIVING, BY A WIRELESS USER EQUIPMENT DEVICE THAT IS ONE OF A PLURALITY OF WIRELESS USER EQUIPMENT DEVICES, USER EQUIPMENT GROUPING PARAMETERS FOR GROUP ASSIGNMENT, WHICH CONFIGURE HOW THE PLURALITY OF WIRELESS USER EQUIPMENT DEVICES ARE TO BE ORGANIZED INTO GROUPS ASSOCIATED WITH DIFFERENT WAKE-UP SIGNALS TO BE RECEIVED FROM AN ACCESS NODE AT PREDETERMINED INTERVALS BEFORE DIFFERENT TRANSMISSIONS ARE RECEIVED FROM THE ACCESS NODE, TO INDICATE TO THE WIRELESS USER EQUIPMENT DEVICE WHEN TO MONITOR A CONTROL CHANNEL IN RESPONSE TO RECEIVING A WAKE-UP SIGNAL, PRIOR TO MONITORING THE DIFFERENT TRANSMISSIONS RECEIVED FROM THE ACCESS NODE;

STEP 504: WHEREIN THE ASSIGNMENT OF WIRELESS USER EQUIPMENT DEVICES TO EACH GROUP, IS BASED ON THE USER EQUIPMENT GROUPING PARAMETERS; AND

STEP 506: MONITORING, BY THE WIRELESS USER EQUIPMENT DEVICE, A CONTROL CHANNEL IN RESPONSE TO RECEIVING THE WAKE-UP SIGNAL, BASED ON THE GROUPING OF THE WIRELESS USER EQUIPMENT DEVICE TO ONE OF THE GROUPS ASSOCIATED WITH THE WAKE-UP SIGNAL.

WHEREIN THE USER EQUIPMENT GROUPING PARAMETERS COMPRISE A RELATIVE NUMBER OF WIRELESS DEVICES SEPARATELY FOR EACH GROUP.

**FIG. 6**

MAGNETIC DISC STORAGE

OPTICAL DISC STORAGE

REMOVABLE STORAGE 126

SEMICONDUCTOR MEMORY CIRCUIT DEVICE STORAGE

MICRO-SD SEMICONDUCTOR MEMORY CARD STORAGE

**EP 3 874 807 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018175760 A1
- EP 2866513 A2
- EP 2811806 A1